# EUROPÄISCHE PATENTSCHRIFT

(11) **EP 0 812 275 B1**
(45) Veröffentlichungstag und Bekanntmachung des Hinweises auf die Patenterteilung: **18.11.1998**
(21) Anmeldenummer: 96902875.2
(22) Anmeldetag: 14.02.1996
(51) Int. Cl.: B60Q 1/38, B60Q 1/42

(54) **KONTAKTEINHEIT FÜR EINE KOMBINIERTE BREMS/BLINKLEUCHTENANORDNUNG IN EINEM FAHRZEUG**
CONTACT UNIT FOR A COMBINED BRAKE/BLINKER ARRANGEMENT IN A VEHICLE
UNITE DE CONTACT POUR UN DISPOSITIF COMBINANT FEU STOP ET CLIGNOTANT DANS UN VEHICULE

(30) Priorität: 23.02.1995 DE 19506314
(43) Veröffentlichungstag der Anmeldung: 17.12.1997
(73) Patentinhaber: EATON CONTROLS GmbH & Co. KG, 55445 Langenlonsheim (DE)
(72) Erfinder: WEISS, Hans, Günter, D-55411 Bingen-Dromersheim (DE)
(74) Vertreter: Becker, Bernd, Dipl.-Ing.
(86) Internationale Anmeldenummer: DE9600268
(87) Internationale Veröffentlichungsnummer: WO9626084

(56) Entgegenhaltungen:
- US-A- 2 748 207
- DATABASE WPI Section EI, Week 7703 Derwent Publications Ltd., London, GB; Class X22, AN 77-A5613Y XP002003955 & SU,A,503 755 (OLEINIKOV N G) , 19.März 1976

## Beschreibung

Die Erfindung bezieht sich auf eine Kontakteinheit für eine kombinierte Brems/Blinkleuchtenanordnung in einem Fahrzeug mit einem Blinkerkreis, einem Bremslichtkreis und einem Betätigungshebel, dem mindestens eine mitbewegbare Kontaktbrücke zugeordnet ist.

Bei Kraftfahrzeugen, insbesondere Personenfahrzeugen, ist es zunehmend Wichtig, Komponenten für verschiedene Aufgaben gemeinsam zu verwenden. So sind kombinierte Rück- und Bremsleuchten entwickelt worden, die bei Tage bzw. Fahren ohne Beleuchtung nur während eines Bremsvorgangs aufleuchten. Ist die Beleuchtung eingeschaltet, so brennt die betreffende Leuchte mit einer bestimmten Helligkeit. Wird ein Bremsvorgang eingeleitet, dann scheint die Leuchte heller. Bei einer anderen Bauform brennen dann andere Lampen, die in der Leuchte eingebaut sind, wodurch die Leuchte dann ebenfalls heller scheint.

Der Erfindung liegt die Aufgabe zugrunde, eine Schaltungsanordnung zu schaffen, die es gestattet, eine Bremsleuchte zugleich als Blinkleuchte zu verwenden.

Diese Aufgabe ist erfindungsgemäß durch Zurverfügungstellung einer Kontakteinheit mit den Merkmalen des Anspruchs 1 gelöst. Vorteilhafte Weiterbildungen sind Gegenstand der Unteransprüche.

Eine erfindungsgemäße Kontakteinheit für eine kombinierte Brems/Blinkleuchtenanordnung in einem Fahrzeug mit einem Blinkerkreis und einem Bremslichtkreis und einem Betätigungshebel, dem wenigstens eine mitbewegbare Kontaktbrücke zugeordnet ist, ist somit so ausgebildet, daß eine erste Kontaktbrücke des Betätigungshebels für den Blinkerkreis vorgesehen ist, wobei die erste Kontaktbrücke Kontakte für Kontaktbahnen des vorderen und hinteren Stromkreises des Blinkerkreises aufweist, die bei Betätigung des Betätigungshebels (I) entsprechend geschlossen werden. Ferner umfaßt die erste Kontaktbrücke einen weiteren Kontakt für das Schließen eines Schalters im Blinkerkreis bei Weiterbetätigung des Betätigungshebels (III), der das Aufschalten des Blinkimpulses auf die Kontaktbrücke freigibt.

Die erfindungsgemäße Kontakteinheit ermöglicht demnach die Verwendung einer blinkenden Bremsleuchte im Fahrzeug. Dabei ist auf einfache Weise die Vorgabe gelöst, daß der Blinkerkreis und der Bremslichtkreis gekoppelt sind, wobei das gleichzeitige Einschalten des vorderen und hinteren Stromkreises durch die Betätigung des weiteren Kontaktes der ersten Kontaktbrücke, d.h. ein gemeinsames Zuschalten eines Schaltungsteils, gewährleistet ist.

Es ist daher möglich, zwei getrennte Blinkerstromkreise, d.h. einen vorderen und einen hinteren Stromkreis, vorzusehen. Dabei ist eine normale Blinkerkontaktierung für den vorderen Stromkreis des Blinkerkreises vorhanden. Der hintere Stromkreis des Blinkerkreises umfaßt eine mit dem Bremslichtkreis gemeinsame Leuchte, z.B. eine Glühlampe.

Die Funktion der Kontakteinheit bzw. der Schaltungsanordnung ist dabei folgende: Wenn das Fahrzeug abgebremst wird, müssen in jedem Fall die beiden Bremsleuchten brennen. Soll dann auch noch ein Richtungswechsel des Fahrzeuges angezeigt werden, blinkt dann nach Betätigung des Betätigungshebels die vordere Blinkleuchte in gewohnter Weise. Außerdem geht das Leuchten des Bremslichtes auf der betreffenden Seite in den Impulsbetrieb mit gleichem Takt wie die entsprechende vordere Blinkleuchte über. Wenn andererseits nur gebremst wird, d.h. ohne Betätigung des Betätigungshebels und Auslösung des Blinkerkreises, brennen die beiden Bremsleuchten ganz normal.

Vorteilhaft ist eine zweite Kontaktbrücke des Betätigungshebels für den Bremslichtkreis vorgesehen, die mit der ersten Kontaktbrücke gekoppelt ist und Kontakte für Kontaktbahnen des Stromkreises des Bremslichtkreises aufweist, die bei Betätigung des Betätigungshebels entsprechend geöffnet werden, während sie bei weiterer Betätigung des Betätigungshebels (II) durch die entsprechenden Kontakte des Blinkerkreises wieder geschlossen werden. Dies ermöglicht besonders zuverlässig eine genaue Zusammenschaltung des Bremslichtkreises und des Blinkerkreises. Nach Kurzschließen der beiden Lampen durch die Kontaktbrücke wird anschließend erst der Blinkimpuls auf diese Kontaktbrücke aufgeschaltet. Dann fangen zwangsläufig beide Lampen vorne und hinten gleichzeitig an zu blinken.

Gemäß der Erfindung ist der weitere Kontakt der ersten Kontaktbrücke zweckmäßig zum Schließen der Plusleitung des Blinkerkreises vorgesehen. Dies ist eine besonders einfach und wirkungsvolle Maßnahme, um die gleichzeitige Einschaltung des vorderen und hinteren Blinkerstromkreises sicherzustellen.

Bei einem bevorzugten Ausführungsbeispiel der erfindungsgemäßen Kontakteinheit sind eine oder beide Kontaktbrücken Dreipunkt-Kontaktbrücken.

Dabei ist vorteilhaft eine Abheberampe in Bewegungsrichtung vor der jeweiligen Kontaktschließstellung des weiteren Kontaktes der ersten Kontaktbrücke vorgesehen. Mittels einer solchen Hubbrückenanordnung ist eine exakte Schaltabfolge sichergestellt.

Eine gute Krafteinleitung im Schwerpunktbereich zur Ansteuerung der Dreipunktbrücken ist dadurch ermöglicht, daß der Betätigungshebel jeweils eine auf seiner Hebelachse angeordnete Bohrung für die Druckfederlagerung der Dreipunktbrücke aufweist. Auf diese Weise wird dann die Druckfeder exakt im Schwerpunkt angesteuert, wobei zudem die positionsgenaue Mitnahme beider Kontaktbrücken gewährleistet ist. Es werden nämlich nicht die Schenkel der Kontaktbrücken mitgenommen, sondern die Bohrung. Diese ist exakter herstellbar, es läßt sich eine genaue Fassung erzielen. Auf diese Weise kann die Brücke in ihrer tangentialen Bewegung sehr exakt mitgenommen werden, so daß beide Brücken eine sehr genaue Zuordnung zueinander haben. Dies ermöglicht wiederum eine genaue Einhaltung des Schaltbildes bzw. der Abfolge der Kontaktpunkte im Kontaktwegediagramm.

Die Erfindung wird im folgenden weiter anhand eines Ausführungsbeispiels und der Zeichnung weiter erläutert. Dabei ist diese Erläuterung lediglich zur weiteren Veranschaulichung der Erfindung vorgesehen und keinesfalls als diese einschränkend anzusehen. In der Zeichnung zeigen:
- Fig. 1: ein Schaltungsschema einer Blinkanlage, wie sie für Personenkraftwagen verwendet wird,
- Fig. 2: eine Teilansicht einer Kontakteinheit gemäß der Erfindung,
- Fig. 3: eine Teilschnittansicht der mechanischen Schalteranordnung einschließlich eines Betätigungshebels für Blinker und Licht bei fortgelassener Kontaktbrücke.
- Fig. 4: eine Schnittansicht von zwei Dreipunkt-Kontaktbrücken, wie sie bei der Schalteranordnung von Fig. 3 zum Einsatz kommen (siehe (a)) und
- Fig. 5: eine Draufsicht auf die Darstellung nach Fig. 4.

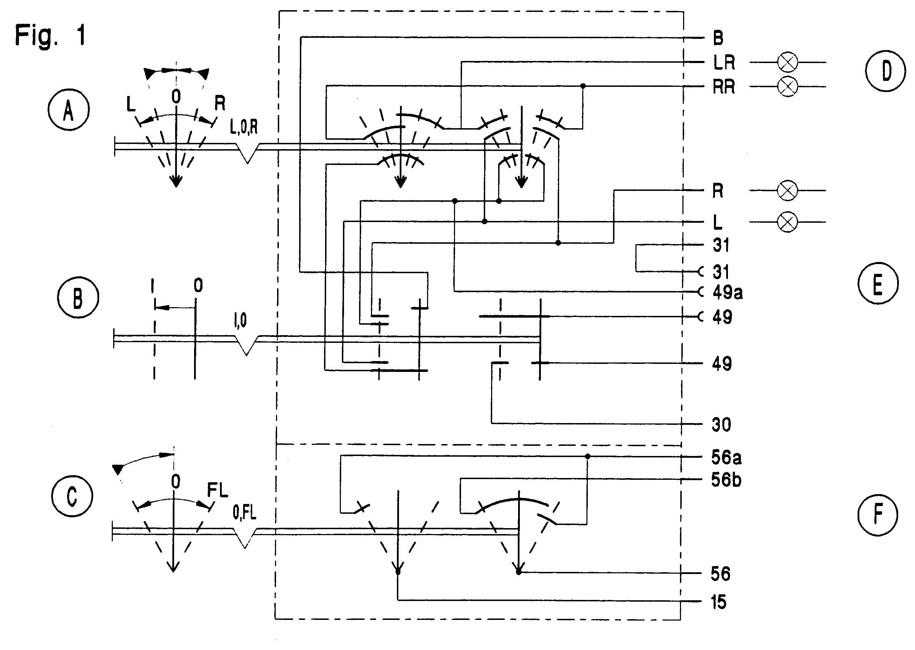

In Fig. 1 ist ein Schaltungsschema einer Blinkanlage für ein Kraftfahrzeug dargestellt, wie es auch herkömmlich verwendet wird. Soweit die Schaltungsteile nicht die erfindungsgemäße Kontakteinheit betreffen, werden sie nicht weiter erläutert. Links sind die verschiedenen Schaltstellungen des Betätigungshebels und deren Funktionen veranschaulicht, bei (A) die Blinkerfunktion mit Haltekontakt und Rastkontakt, bei (B) Warnblinkfunktion und bei (C) Fernlicht- bzw. Lichthupenfunktion. Rechts sind die verschiedenen Anschlüsse dargestellt, bei (D) Bremslicht, bei (E) Blinklicht und bei (F) Abblendlicht. In der Mitte sind die Leitungsführungen schematisch in Verbindung mit den Schaltstellungen links und den Funktionen rechts dargestellt.

Mehr im einzelnen, bei den Bremslichtkontakten (D) bedeutet B Bremse, LR linkes Bremslicht und RR rechtes Bremslicht. Bei den Blinklichtkontakten bedeutet R rechtes Blinklicht und L linkes Blinklicht. Die Relaiskontakte sind mit 31, 49 und 49a bezeichnet, wobei 49a der Plusleiter ist. Der Kontakt 30 steht stets unter Spannung.

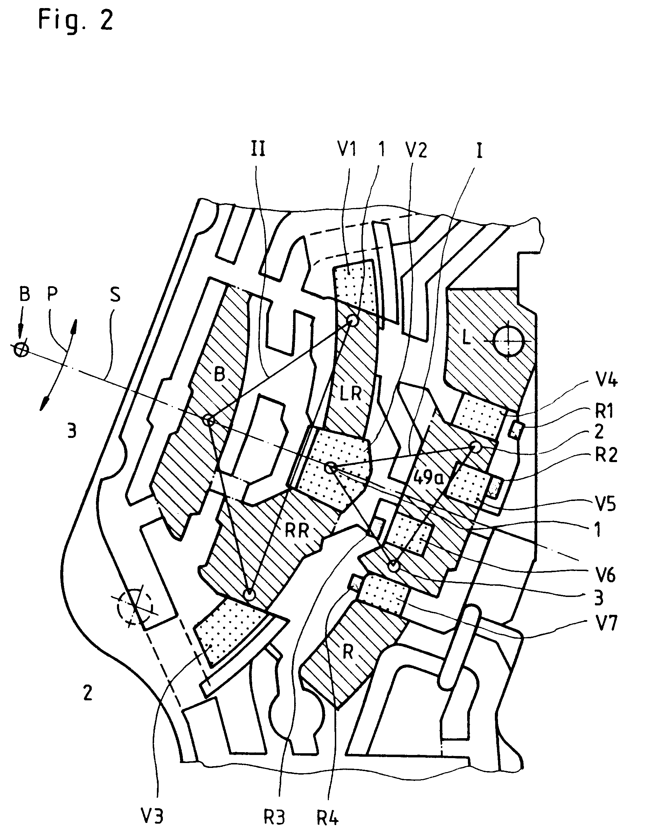

In der Teilansicht einer erfindungsgemäßen Kontakteinheit von Fig. 2 sind die Kontaktbahnen gestrichelt und Vertiefungen gepunktet dargestellt. Es sind die Kontaktbezeichnungen von Fig. 1 übernommen worden. Die Kontaktbahnen B, LR und RR sind somit Teil des Bremslichtkreises. Die Kontaktbahnen R, L und 49a sind Teil des Blinkerkreises. Oberhalb und unterhalb der Kontaktbahn LR, oberhalb und in der Kontakbahn 49a sowie oberhalb der Kontaktbahn R sind Vertiefungen V1 bis V7 angeordnet. Benachbart der Kontaktbahn 49a sind in Fig. 2 rechts und links, in bezug auf die Schalterachse S versetzt jeweils zwei Abheberampen R1 - R4 angeordnet.

Des weiteren veranschaulicht der Pfeil P die Schwenkrichtung des Betätigungshebels, d.h. der Schalterachse. Es sind zusätzlich für die Ruhestellung (Nullstellung) die Kontaktpositionen von zwei Dreipunkt-Kontaktbrücken I und II mit jeweils drei Kontaktpunkten 1 bis 3 eingezeichnet.

Die veranschaulichte Kontakteinheit arbeitet wie folgt. Soll links geblinkt werden, so wird der Betätigungshebel entsprechend verschwenkt. Dabei verläßt der Kontakt 1 der Konktaktbrücke II die Kontaktbahn LR. Der Kontakt 1 der Kontaktbrücke I wird dafür auf die Kontaktbahn LR geschoben. Bei Weiterverschwenken des Betätigungshebels gelangt der Kontakt 2 der Kontaktbrücke I auf die Kontaktbahn L. Wenn der Kontakt 1 der Kontaktbrücke I mit der Kontaktbahn LR und der Kontakt 2 der Kontaktbrücke I mit der Kontaktbahn L den betreffenden Kontakt geschlossen hat, erfolgt bei Weiterverschwenken des Betätigungshebels durch den Kontakt 3 der Kontaktbrücke I mit der Kontaktbahn 49a ein zeitgleiches Einschalten des vorderen und hinteren Stromkreises des Blinkerkreises und damit Start des Blinkbetriebes vorne und hinten. Entsprechendes gilt für das Blinken rechts.

Die Vertiefungen V1 bis V7 dienen dazu, definierte Kontaktzustände zu gewährleisten, insbesondere auch als Funkenkammern. Durch die Kunststofframpen R1 bis R4 ist ebenfalls eine saubere Schaltfolge bei genauem Abheben der Kontaktkalotten sichergestellt.

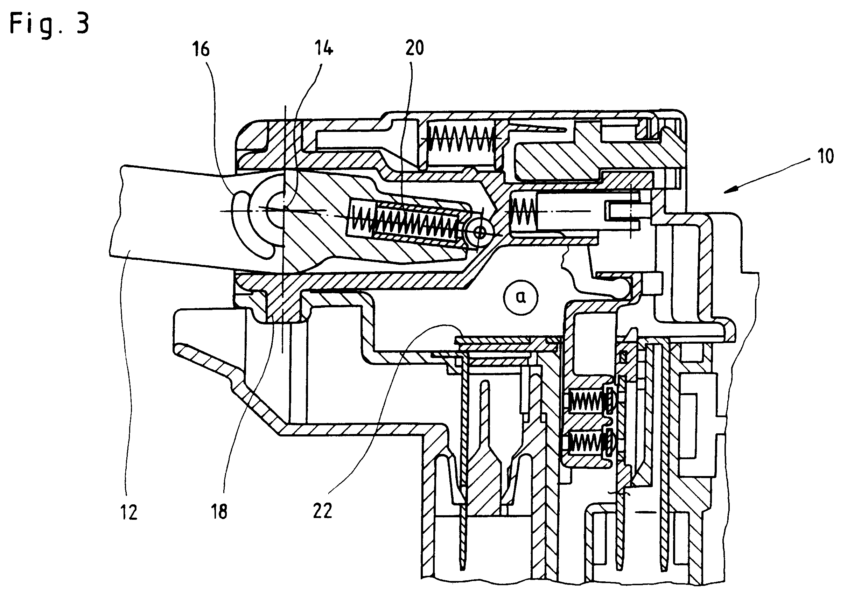

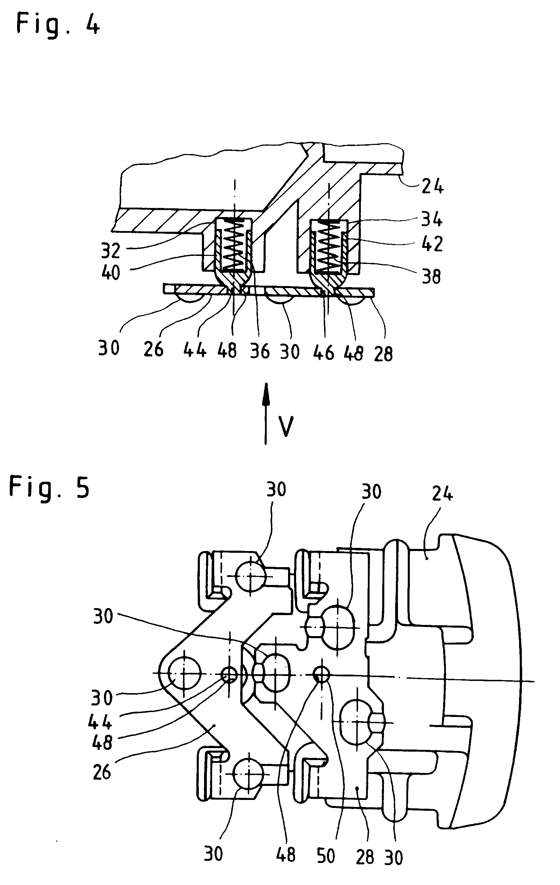

Fig. 3 veranschaulicht eine Teilschnittansicht der mechanischen Schalteranordnung einschließlich eines Betätigungshebels für Blinker, Licht. Dabei ist bei (a) die Kontaktbrücke fortgelassen. Diese ist in erfindungsgemäßer Ausgestaltung in der Teilschnittansicht von Fig. 4 und Fig. 5 veranschaulicht.

Es werden nun von Fig. 3 nur diejenigen Teile beschrieben, die für die Erläuterung der erfindungsgemäßen Kontakteinheit relevant sind. In den zugehörigen Schalterblock 10 erstreckt sich ein Betätigungshebel 12, der außer als Blinkhebel auch zur Einstellung des Fernlichts bzw. der Lichthupe dient und entsprechend um zwei Achsen verschwenkbar ist. Bei 14 ist eine Schwenkachse für die Lichtumschaltung veranschaulicht. Ein Schlitz 16 dient als Führung bei der Blinkschaltbewegung. Der Betätigungshebel 14 ist in einer Aufnahme 18 unter Einsatz einer Druckfeder 20 gelagert. Mit 22 ist die Kontaktplatine mit den Kontaktbahnen etc. bezeichnet, die in Fig. 2 mehr im einzelnen dargestellt ist. (a) zeigt, wo die Kontaktbrücke(n) angeordnet ist (sind). Es ist der Aufbau der Kontaktplatine 22 und der Kontaktbrücke(n) (a), in denen sich die erfindungsgemäße Kontakteinheit von denen des Standes der Technik, abgesehen von der entsprechend anderen Leitungsführung und Beschaltung, unterscheidet.

Die Fig. 4 und 5 zeigen zwei Dreipunkt-Kontaktbrücken 26, 28, die in die Kontaktbrückenhalterung 24 eingeklipst sind. Die Fixierung und Mitnahme der beiden Kontaktbrücken 26, 28 erfolgt mittels Führungsstößel 40, 42, die einerseits mit Zapfen 44, 46 in die Führungslöcher 48, 50 der Kontaktbrücken 26, 28 eingreifen und andererseits in Bohrungen 32, 34 der Kontaktbrückenhalterung 24 eintauchen und durch die Druckfedern 36, 38 beaufschlagt sind. Die Kontaktbrücken 26, 28 tragen in üblicher Weise Kalotten 30, welche durch die Kraft der federbeaufschlagten Führungsstößel 40, 42 gegen die Kontaktplatine 22 gedrückt werden.

## Patentansprüche

1. Kontakteinheit für eine kombinierte Brems/Blinkleuchtenanordnung in einem Fahrzeug mit einem Blinkerkreis, einem Bremslichtkreis und einem Betätigungshebel (12), dem wenigstens eine mitbewegbare Kontaktbrücke (I, II) zugeordnet ist,
dadurch **gekennzeichnet,** daß
- eine erste Kontaktbrücke (I) des Betätigungshebels (12) für den Blinkerkreis vorgesehen ist,
- die erste Kontaktbrücke (I) Kontakte (1, 2, 3) für Kontaktbahnen (LR, RR, 49a, L, R) des vorderen und hinteren Stromkreises des Blinkerkreises aufweist, die bei Betätigung des Betätigungshebels (12) ent sprechend geschlossen werden, und
- die erste Kontaktbrücke (I) einen weiteren Kontakt für das Schließen eines Schalters im Blinkerkreis bei Weiterbetätigung des Betätigungshebels (12) auf weist, der das Aufschalten des Blinkimpulses auf die Kontaktbrücke freigibt.

2. Kontakteinheit nach Anspruch 1, dadurch **gekennzeichnet,** daß die erste Kontaktbrücke (I) eine Dreipunkt-Kontaktbrücke ist.

3. Kontakteinheit nach Anspruch 1 oder 2, dadurch **gekennzeichnet,** daß eine zweite Kontaktbrücke (II) des Betätigungshebels (12) für den Bremslichtkreis vorgesehen ist, die mit der ersten Kontaktbrücke (I) gekoppelt ist und Kontakte (1, 2) für Kontaktbahnen (LR, RR) des Stromkreises des Bremslichtkreises aufweist, die bei Betätigung des Betätigungshebels (12) entsprechend geöffnet werden, während sie bei weiterer Betätigung des Betätigungshebels (12) durch die entsprechenden Kontakte (1) des Blinkerkreises wieder geschlossen werden.

4. Kontakteinheit nach Anspruch 3, dadurch **gekennzeichnet,** daß die zweite Kontaktbrücke (II) eine Dreipunkt-Kontaktbrücke ist.

5. Kontakteinheit nach einem der Ansprüche 1 bis 4, dadurch **gekennzeichnet,** daß der weitere Kontakt (3) der ersten Kontaktbrücke (I) zum Schließen der Plusleitung (49a) des Blinkerkreises vorgesehen ist.

6. Kontakteinheit nach einem der Ansprüche 1 bis 5, dadurch **gekennzeichnet,** daß eine Abheberampe (R) in Bewegungsrichtung vor der jeweiligen Kontaktschließstellung des weiteren Kontaktes (3) der ersten Kontaktbrücke (I) vorgesehen ist.

7. Kontakteinheit nach einem der Ansprüche 1 bis 6, dadurch **gekennzeichnet,** daß eine Abheberampe (R) in Bewegungsrichtung vor der jeweiligen Kontaktschließstellung der Kontakte der ersten Kontaktbrücke (I) für die Kontaktbahnen des vorderen und hinteren Stromkreises des Blinkerkreises vorgesehen ist.

8. Kontakteinheit nach einem der Ansprüche 2 und/oder 4 sowie 3 bis 7, dadurch **gekennzeichnet,** daß der Betätigungshebel (12) jeweils eine auf seiner Hebelachse (S) angeordnete Bohrung (32, 34) für die Druckfederlagerung der Dreipunkt-Kontaktbrücken (26, 28) aufweist.

## Claims

1. Contact unit for a combined brake/flasher arrangement in a vehicle having a flasher circuit, a brake light circuit and an actuating lever (12), with which at least one jointly displaceable contact bridge (I, II) is associated,
characterised in that
- a first contact bridge (I) of the actuating lever (12) is provided for the flasher circuit,
- the first contact bridge (I) has contacts (1, 2, 3) for contact paths (LR, RR, 49a, L, R) of the front and rear current circuits of the flasher circuit, which contacts are appropriately closed when the actuating lever (12) is actuated, and
- the first contact bridge (I) has an additional contact for closing a switch in the flasher circuit when the actuating lever (12) is further actuated, which contact releases the switching of the flasher pulse to the contact bridge.

2. Contact unit according to claim 1, characterised in that the first contact bridge (I) is a three-point contact bridge.

3. Contact unit according to claim 1 or 2, characterised in that a second contact bridge (II) of the actuating lever (12) is provided for the brake light circuit, said second contact bridge being connected to the first contact bridge (I) and having contacts (1, 2) for contact paths (LR, RR) of the current circuit of the brake light circuit, which contacts are appropriately opened when the actuating lever (12) is actuated, while they are closed again by the appropriate contacts (1) of the flasher circuit when the actuating lever (12) is further actuated.

4. Contact unit according to claim 3, characterised in that the second contact bridge (II) is a three-point contact bridge.

5. Contact unit according to one of claims 1 to 4, characterised in that the additional contact (3) of the first contact bridge (I) is provided to close the positive contact (49a) of the flasher circuit.

6. Contact unit according to one of claims 1 to 5, characterised in that, when viewed with respect to the direction of movement, a lifting ramp (R) is provided in front of the respective contact closing position of the additional contact (3) of the first contact bridge (I).

7. Contact unit according to one of claims 1 to 6, characterised in that, when viewed with respect to the direction of movement, a lifting ramp (R) is provided in front of the respective contact closing position of the contacts of the first contact bridge (I) for the contact paths of the front and rear circuits of the flasher circuit.

8. Contact unit according to one of claims 2 and/or 4 and 3 to 7, characterised in that the actuating lever (12) has a respective bore (32, 34), which is disposed on its lever axis (S), for the compression spring mounting of the three-point contact bridges (26, 28).

## Revendications

1. Unité de contact pour un dispositif combinant feu de stop/clignotant dans un véhicule, comportant un circuit de clignotant, un circuit de feu de stop et un levier d'actionnement (12), auquel est associé au moins un pont de contact (I, II) déplaçable avec celui-ci,
caractérisée en ce que
- un premier pont de contact (I) du levier d'actionnement (12) est prévu pour le circuit de clignotant,
- le premier pont de contact (I) comporte des contacts (1, 2, 3) pour des pistes de contact (LR, RR, 49a, L, R) du circuit électrique avant et du circuit électrique arrière du circuit du clignotant, qui sont fermés en correspondance lors d'un actionnement du levier d'actionnement (12), et
- le premier pont de contact (I) comporte un contact supplémentaire pour la fermeture d'un interrupteur placé dans le circuit de clignotant lors d'un actionnement ultérieur du levier d'actionnement (12), qui autorise l'arrivée de l'impulsion de clignotement sur le pont de contact.

2. Unité de contact selon la revendication 1, caractérisée en ce que le premier pont de contact (I) est un pont de contact à trois points.

3. Unité de contact selon la revendication 1 ou 2, caractérisée en ce qu'un deuxième pont de contact (II) du levier d'actionnement (12) est prévu pour le circuit de feu de stop, qui est couplé au premier pont de contact (I) et comporte des contacts (1, 2) pour des pistes de contact (LR, RR) du circuit électrique du circuit de feu de stop, qui sont ouverts en correspondance lors de l'actionnement du levier d'actionnement (12), tandis qu'ils sont à nouveau fermés par les contacts correspondants (1) du circuit de clignotant, lors d'un actionnement ultérieur du levier d'actionnement (12).

4. Unité de contact selon la revendication 3, caractérisée en ce que le deuxième pont de contact (II) est un pont de contact à trois points.

5. Unité de contact selon l'une des revendications 1 à 4, caractérisée en ce que le contact supplémentaire (3) du premier pont de contact (I) est prévu pour la fermeture de la ligne plus (49a) du circuit de clignotant.

6. Unité de contact selon l'une des revendications 1 à 5, caractérisée en ce qu'une rampe de soulèvement (R) est prévue dans le sens de déplacement devant la position de fermeture de contact respective du contact supplémentaire (3) du premier pont de contact (I).

7. Unité de contact selon l'une des revendications 1 à 6, caractérisée en ce qu'une rampe de soulèvement (R) est prévue dans le sens de déplacement devant la position de fermeture de contact respective des contacts du premier pont de contact (I) pour les pistes de contact du circuit électrique avant et du circuit électrique arrière du circuit de clignotant.

8. Unité de contact selon l'une des revendications 2 et/ou 4 ainsi que 3 à 7, caractérisée en ce que le levier d'actionnement (12) présente un perçage respectif (32, 34), disposé sur son axe de levier (S), pour la suspension par ressort de compression des ponts de contact à trois points (26, 28).
